(19) Europäisches Patentamt
European Patent Office
Office européen des brevets

(11) **EP 3 076 897 B1**

(12) **FASCICULE DE BREVET EUROPEEN**

(45) Date de publication et mention de la délivrance du brevet:
**31.01.2018 Bulletin 2018/05**

(21) Numéro de dépôt: **14821793.8**

(22) Date de dépôt: **03.12.2014**

(51) Int Cl.:
**A61C 19/05** (2006.01)   **G01L 1/20** (2006.01)

(86) Numéro de dépôt international:
**PCT/FR2014/053155**

(87) Numéro de publication internationale:
**WO 2015/082846 (11.06.2015 Gazette 2015/23)**

(54) **SYSTÈME DE DÉTERMINATION DE LA SURFACE DE CONTACT ET DE LA RÉPARTITION DES FORCES OCCLUSALES ENTRE LES DENTS D'UNE MACHOIRE DE PATIENT ET PROCÉDÉ CORRESPONDANT**

SYSTEM ZUR BESTIMMUNG DER KONTAKTFLÄCHE UND DER VERTEILUNG VON OKKLUSIONSKRÄFTEN ZWISCHEN DEN ZÄHNEN EINES PATIENTENKIEFERS UND ZUGEHÖRIGES VERFAHREN

SYSTEM FOR DETERMINING THE CONTACT SURFACE AND THE DISTRIBUTION OF OCCLUSAL FORCES BETWEEN THE TEETH OF A PATIENT'S JAW, AND CORRESPONDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1361996**

(43) Date de publication de la demande:
**12.10.2016 Bulletin 2016/41**

(73) Titulaire: **Odaxos**
**53001 Laval (FR)**

(72) Inventeurs:
• **BREL, Olivier**
**F-53000 Laval (FR)**
• **BREL, Geneviève**
**F-53000 Laval (FR)**
• **KERVRAN, Yannick**
**F-35000 Rennes (FR)**
• **MOHAMMED-BRAHIM, Tayeb**
**F-35700 Rennes (FR)**
• **CRAN, Samuel**
**F-35320 Le Petit Fougeray (FR)**
• **LE MONIES DE SAGAZAN, Olivier**
**F-35000 Rennes (FR)**

(74) Mandataire: **Benech, Frédéric**
**Cabinet Benech**
**15, rue d'Astorg**
**75008 Paris (FR)**

(56) Documents cités:
**WO-A1-86/05678      WO-A1-89/02727**
**WO-A1-98/09144      DE-A1- 3 117 248**
**US-A- 5 086 652**

**Description**

La présente invention concerne un système de détermination de la surface de contact et de la répartition des forces occlusales exercées entre les dents supérieures et les dents inférieures d'une mâchoire de patient, comprenant un organe détecteur de contacts entre les dents agencé pour être inséré entre les dents du patient, des éléments de connexion de l'organe détecteur avec des moyens de calcul de la répartition des forces occlusales pour en réaliser la cartographie et lesdits moyens de calcul.

Elle concerne également un procédé mettant en oeuvre un tel système ainsi qu'une plaque souple amovible utilisée avec un tel système.

L'invention trouve une application particulièrement importante bien que non exclusive dans le domaine de la prise d'empreinte dentaire et/ou de la rectification (polissage) des surfaces des dents entrant en contact entre elles notamment pour assurer une bonne occlusion dentaire.

Par bonne occlusion on entend ici une bonne répartition des forces de pression entre dents maxillaires et dents mandibulaires lors de la mastication et/ou lorsque le patient serre les mâchoires.

Lors de soins dentaires, par exemple à l'occasion de la mise en place d'un implant, le praticien doit s'assurer de la bonne occlusion dentaire du patient. Plus précisément, le dentiste doit vérifier que l'implant nouvellement installé ne gêne pas le mouvement de la mâchoire et/ou ne crée pas une pression interne rémanente au repos.

On sait que les défauts de l'occlusion, même de l'ordre de quelques micromètres, et qui interviennent en statique et/ou en dynamique, peuvent être générateurs de troubles et/ou de maladies pour le patient, tels que notamment des nécroses ou des déchaussements des dents, ou encore peuvent engendrer des problèmes posturaux du patient ou des maux de tête, pouvant aller jusqu'à générer des dépressions.

Pour éviter de tels inconvénients le dentiste posant par exemple une prothèse, cherche à l'ajuster en tentant de détecter les points durs afin de limer les parties de l'implant ou des dents qui gênent une bonne occlusion.

On connaît des dispositifs de détection de bons contacts occlusaux. Ils utilisent des substrats imprégnés d'agents colorés libérés par la mastication, communément désignés sous la dénomination de papier à articuler, comme ceux commercialisés par la société allemande Bausch.

De tels dispositifs présentent cependant des inconvénients.

Ils ne permettent pas des mesures précises, sûres et facilement répétitives. Ils impliquent en effet une lecture visuelle et donc nécessairement subjective du dentiste de la densité de coloration, plutôt que de permettre d'obtenir un résultat objectif.

Aucun de ces dispositifs ne détermine par ailleurs l'occlusion de façon dynamique ni ne permet de prendre une empreinte dentaire qui peut être conservée sous forme numérique puis modifiée ultérieurement dans le temps.

Par déterminer l'occlusion de façon dynamique, on entend mesurer l'ordre d'apparition des points d'occlusion pendant un mouvement de la mâchoire lors d'une prise d'empreinte proprement dite.

La possibilité de modifier le fichier va permettre quant-à-elle de rafraichir et/ou mettre à jour les données relatives au modèle de dentition du patient.

On connait également des dispositifs capteurs de contact entre deux objets opposés (EP 0 216 899, WO89/02727) comportant un ensemble d'électrodes monté sur une feuille support.

Cependant, ceux-ci ne présentent pas une souplesse mécanique suffisante. Ils modifient de ce fait le comportement de la mâchoire à mesurer, ce qui les rend peu fiables. De plus, ils ne possèdent pas de résolution spatiale importante.

La présente invention, comme défini dans les revendications 1 et 9, vise à pallier ces inconvénients et propose un dispositif et un procédé répondant mieux que ceux antérieurement connus aux exigences de la pratique, notamment en ce qu'elle va permettre des mesures fiables, répétitives, sous forme de fichiers numériques facilement manipulables, permettant des comparaisons et des diagnostiques jusqu'alors impossibles à atteindre.

Le praticien dentiste va pouvoir effectuer de façon précise les corrections de dentition de ses patients, ce qui va entraîner un confort et une santé considérablement améliorée de ces derniers.

Avec l'invention il va donc être possible de mesurer le champ de pression appliqué à une surface non plane avec une résolution spatiale d'une centaine de micromètres à l'aide d'un réseau de contraintes.

Dans ce but, l'invention propose notamment un système de détermination de la surface de contact et de la répartition des forces exercées entre les dents supérieures et les dents inférieures d'une mâchoire de patient comprenant un organe détecteur de contacts entre les dents agencé pour être inséré entre les dents du patient, des éléments de connexion de l'organe détecteur avec des moyens de calcul de la répartition des forces occlusales pour en réaliser la cartographie et lesdits moyens de calcul,

caractérisé en ce que ledit organe détecteur comprend une pièce de support d'une plaque souple amovible, ladite plaque souple étant formée d'une feuille en matière plastique souple rendue solidaire d'une grille de capteurs de pression comprenant une première couche comportant un premier réseau d'électrodes dites électrodes de ligne, généralement parallèles, d'une deuxième couche intermédiaire de résistivité variable en fonction de la pression qui lui est appliquée, et d'une troisième couche comprenant un second réseau d'électrodes, dites électrodes de colonne, généralement parallèles, définissant des zones dites d'intersection avec les électrodes de ligne, en ce que la grille de capteurs comprend au moins 5000 zones d'intersections adjacentes les unes des autres, de section carrée inférieure ou égale à 600 micro mètres,

et en ce que la couche intermédiaire comprend une tranche en silicium microcristallin semi-conducteur d'épaisseur inférieure ou égale à 50 nano mètres.

En utilisant un nombre très important de points de mesure, i.e. supérieur à 5000, constitués chacun d'un capteur, l'ensemble des capteurs formant un maillage, on peut réaliser une mesure précise et fine spatialement (un point de mesure de l'ordre de $500\mu m$ dans les deux directions de l'espace).

On notera que les couches et/ou tranches qui sont en général d'épaisseurs différentes entre elles sont par contre d'épaisseurs constantes ou sensiblement constantes.

De même en utilisant un matériau pour la couche intermédiaire de faible épaisseur et qui, soumis à des pressions pouvant aller au-delà de 600 N, se déforme suffisamment pour ne pas gêner la mesure, on assure ainsi une souplesse suffisante du capteur.

Dans des modes de réalisation avantageux, on a par ailleurs et/ou de plus recours à l'une et/ou à l'autre des dispositions suivantes :

- la couche intermédiaire est formée par dépôt plasma du silicium dopé sur une couche isolante ;
- les électrodes sont en aluminium ;
- la première couche comprend plus de cent électrodes de ligne et la troisième couche plus de cinquante électrodes de colonne ;
- la première couche est d'épaisseur comprise entre 200 nm et 400 nm, la tranche plane en silicium microcristallin est d'épaisseur inférieure à 30 nm et la troisième couche est d'épaisseur comprise entre 400 nm et 600 nm ;
- les éléments de connexion comprennent une carte d'acquisition et une broche de connexion avec la pièce support ;
- les moyens de calcul comprennent des moyens agencés pour afficher dynamiquement sur un écran d'ordinateur la cartographie des forces occlusales en intégrant des données de la mâchoire propres à un patient déterminé.

L'invention propose également un procédé de détermination de la surface de contact et de la répartition des forces occlusales d'une mâchoire de patient, permettant d'obtenir la cartographie desdites forces occlusales mettant en oeuvre un système tel que décrit ci-dessus.

Elle propose aussi un procédé de détermination de la surface de contact et de la répartition des forces occlusales exercées entre les dents supérieures et les dents inférieures d'une mâchoire de patient, adapté pour une prise d'empreinte dentaire, dans lequel on détecte les contacts entre les dents par insertion d'un organe entre les dents du patient, on mesure les pressions par le biais dudit organe munie d'une feuille en matière plastique souple collée à une grille de capteurs de pression comprenant au moins 5000 capteurs adjacents les uns des autres, de section carrée inférieure ou égale à 600 micro mètres, la dite grille comprenant une couche intermédiaire de résistivité variable en fonction de la pression, ladite couche intermédiaire comprenant une tranche en silicium microcristallin semi-conducteur d'épaisseur inférieure ou égale à 50 nano mètres, et on calcule la cartographie des forces occlusales à partir de la répartition des pressions mesurées.

Avantageusement on affiche dynamiquement sur un écran d'ordinateur la cartographie en intégrant des données complémentaires.

L'invention concerne aussi une plaque souple amovible utilisée avec un tel système et telle que décrite ci-avant.

Avantageusement la plaque est jetable.

L'invention sera mieux comprise à la lecture de la description qui suit d'un mode de réalisation donné ci-après à titre d'exemples non limitatifs.

La description se réfère aux dessins qui l'accompagnent dans lesquels :

La figure 1 est une vue schématique montrant le système selon l'invention en fonctionnement avec un patient.

La figure 2 est une vue en perspective agrandie éclatée et partielle de la plaque souple de l'organe détecteur du système de la figure 1 (les proportions entre les couches ne sont pas à l'échelle).

Les figures 3A à 3D illustrent les étapes de réalisation d'un capteur de pression de l'organe de détection de la figure 2, en vue de dessus et en coupe transversale A-B.

La figure 4 est une vue schématique en perspective montrant plus précisément un mode de réalisation de l'organe détecteur de la figure 1.

La figure 4A montre une courbe expérimentale de mesure de la variation de l'intensité électrique en fonction de la déformation du capteur pour quatre dimensions de capteurs.

La figure 5 est une vue schématique de la carte d'acquisition appartenant aux éléments de connexion du système de la figure 1.

La figure 6 est un organigramme montrant les étapes principales d'un mode de réalisation du procédé selon l'invention.

La figure 7 est un exemple de vue d'écran d'ordinateur illustrant une présentation des mesures et de la cartographie occlusale d'un patient obtenue avec l'invention.

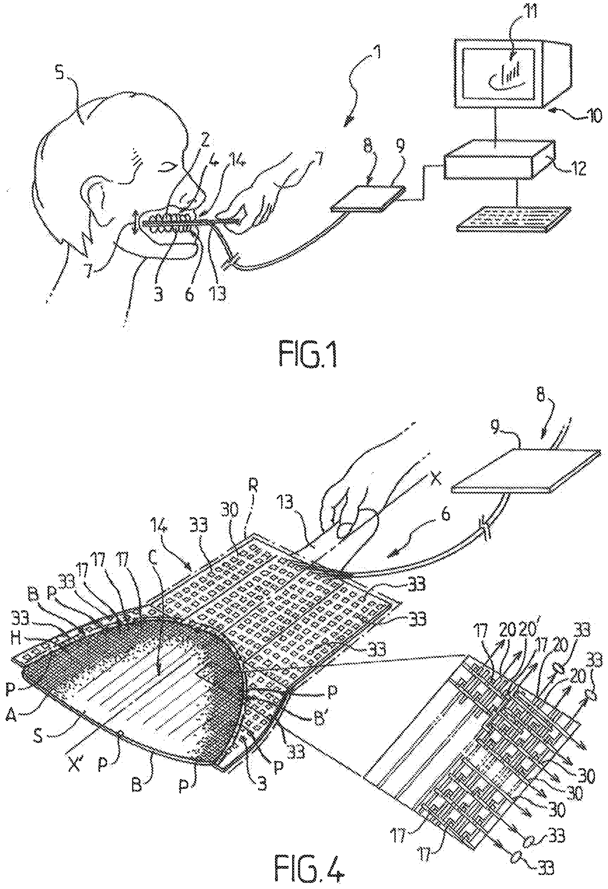

La figure 1 montre un système 1 de détermination de la surface de contact et de la répartition des forces occlusales entre des dents supérieures 2 et des dents inférieures 3 d'une mâchoire 4 d'un patient 5.

Le système 1 comprend un organe détecteur 6 de contacts entre les dents.

Cet organe 6 est inséré par le dentiste (main 7) entre les dents du patient de façon amovible, pour détecter le champ de pressions (flèche 7) lorsque la mâchoire est serrée.

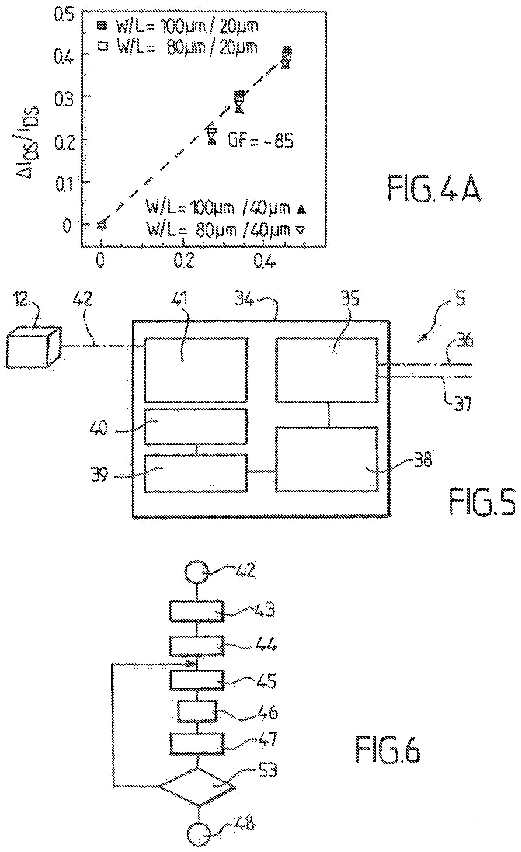

L'organe détecteur 6 est connecté, par des moyens 8 de connexion, comprenant une carte électronique 9 qui sera détaillée en référence à la figure 5, avec des moyens 10 de calcul agencés pour réaliser la cartographie, représentée en dynamique par une image 11 sur l'écran de l'ordinateur 12.

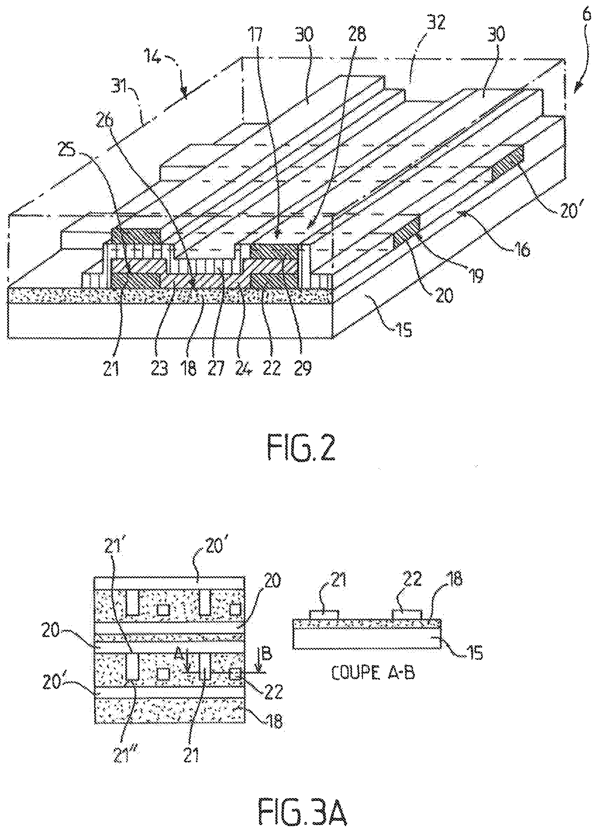

L'organe détecteur 6 comprend une pièce de support 13 d'une plaque souple amovible 14 dont la constitution va maintenant être décrite en référence à la figure 2.

La plaque ou pièce 14 est plane, par exemple de forme parallélépipédique, de dimension 7 cm x 7 cm pour être facilement introduite dans la bouche du patient et par exemple d'épaisseur totale de l'ordre de 800 μm.

Elle comprend une feuille support 15 en matière plastique, par exemple en naphtalate de polyéthylène (PEN) souple, collée à une grille 16 de capteurs de pression 17.

Par souple on entend une plaque capable d'accepter des rayons de courbure inférieurs à 1,5 mm.

La feuille support 15 est sensiblement parallélépipédique, de dimension de l'ordre de, ou inférieure à celle de la plaque.

La pièce 14 comporte une couche fine 18, de céramique, par exemple d'épaisseur de 100 micromètres collée sur la feuille ou PEN 15, par exemple en nitrure de silicium et de dimensions égales à celles de la feuille 15.

L'ensemble ainsi formé comporte sur le dessus, une première couche 19 comprenant un premier réseau d'électrodes 20, 20', dites électrodes de ligne.

Chaque électrode est un fil métallique par exemple de section rectangulaire aplatie, allongé, conducteur électrique par exemple en aluminium.

La largeur des électrodes est inférieure à 2 mm par exemple 0.5 mm et l'épaisseur est par exemple comprise entre 150 nm et 500 nm, par exemple entre 200 et 400, par exemple 300 nm.

Le réseau d'électrodes est ainsi formé d'un faisceau d'électrodes de ligne sensiblement parallèles entre elles, et espacées d'une largeur inférieure à 2 mm par exemple 0.25 mm.

Dans le mode de réalisation plus particulièrement décrit ici, les électrodes de lignes sont en nombre supérieur à 100 par exemple 120 et fonctionnent par paire 20, 20'.

Des éléments conducteurs 21 et 22 sont également prévus et seront détaillés ci-après.

Sur la première couche 19 d'électrodes de ligne est placée une couche intermédiaire 23.

Cette couche intermédiaire 23 comprend une couche ou tranche 24 semi-conductrice de matériau piézoélectrique. Le matériau piézoélectrique est du silicium micro-cristallin semi-conducteur (dopé par exemple à l'arsenic).

La tranche 24 recouvre avec une épaisseur sensiblement homogène comprise entre 30 nm et 100 nm les parties 25 associées au réseau d'électrodes de ligne et l'espace 26 entre elles, en formant un pont électrique entre lesdites parties qui sera détaillé ci-après.

L'espace entre deux paires d'électrodes de ligne 20, 20' ne comporte quant à lui pas de couche de matériau semi-conducteur.

La couche intermédiaire 21 comprend de plus une couche 27 de matériau électriquement isolant par dessus la couche semi-conductrice 24.

Elle est de dimensions latérale et longitudinale égale à celle de la feuille plastique et d'une épaisseur maximale comprise entre 50 nm et 250 nm.

Elle recouvre entièrement la première couche 19 d'électrodes 20, 20' et la couche semi-conductrice 24 sauf à des endroits déterminés 28 qui seront détaillés en référence aux figures 3A à 3D.

La couche intermédiaire 27 ainsi formée est de résistivité variable en fonction de la pression et/ou déformation qui lui est appliquée.

L'organe détecteur 6 et plus précisément la pièce 14 comprend également, au-dessus de la couche intermédiaire 23, une troisième couche 29 comportant un second réseau d'électrodes métalliques dites électrodes de colonne 30.

Les électrodes de colonne 30 sont par exemple semblables aux électrodes de lignes mais disposés de manière à ce que la superposition desdits réseaux de ligne et de colonne forme une grille.

Par exemple, les deux réseaux sont sensiblement orthogonaux entre eux définissant des zones dites d'intersection avec les électrodes de ligne pour former les capteurs 17 de pression collée à la plaque.

Avantageusement une couche de protection 31 (trait mixte sur la figure 2), neutre (isolante) vient combler les vides et protéger le dessus de la pièce 14 pour qu'elle présente une face plane 32 agencée pour coopérer avec l'objet mesuré.

Les électrodes de colonnes sont d'une épaisseur comprise entre 400 nm et 600 nm et en nombre supérieur à 40 par exemple 54.

Le nombre de capteurs 17 étant égal au nombre d'intersections de la grille, dans le mode de réalisation plus particulièrement décrit ici, celui-ci est supérieur à 4000 par exemple 6480. La grille comprend donc au moins 5000 capteurs adjacents les uns des autres et, l'intersection étant orthogonale, la section des capteurs est carré et inférieure ou égale à 600 micro mètres.

Un procédé de fabrication de l'organe capteur selon un mode de réalisation de l'invention va maintenant être décrit en référence aux figures 3A à 3D.

Ce procédé comprend une première étape (figure 3A) de fourniture d'un premier substrat en polyimide sous forme de film plastique tel que ceux commercialisés par la société DuPont Teijin Films pour former la feuille support 15.

Celle-ci forme une plaque sensiblement parallélépipédique d'une section rectangulaire par exemple égale ou inférieure à 15 cm sur 15 cm et d'épaisseur inférieure à 125 $\mu$m par exemple inférieure à 50 $\mu$m (par exemple 10cm X 10 cm X 10pm).

Avantageusement la plaque est libérée de ses impuretés par nettoyage dans un bain ultrasonique avec de l'acétone et rincé avec de l'éthanol ou de » l'isopropanol de façon connue en elle même.

Il est ensuite réalisé une deuxième étape, de dépôt de la couche de céramique 18 tel que du nitrure de silicium. Il s'agit par exemple d'un dépôt chimique en phase vapeur assisté par plasma (acronyme PECVD en anglais). La phase gazeuse de la PECVD est constituée d'un mélange gazeux de Tétrahydrure de silicium ($SiH_4$) dit silane, d'azote ($N_2$) et d'hydrogène ($H_2$)et effectué à une température inférieure à 200°, par exemple 165°C.

La couche de nitrure de silicium recherchée est d'une épaisseur inférieure à 100 nm par exemple de 50 nm.

On effectue ensuite une troisième étape de dépôt, sur la couche céramique 18, du réseau ou couche d'électrodes de lignes 20, 20'.

Le dépôt est réalisé par lithographie à faisceau d'électrons ou par évaporation par effet Joule, pour créer les contacts métalliques de ligne sur une épaisseur de l'ordre de 300 nm.

Les contacts sont alors gravés par gravure humide. Par exemple, l'échantillon est immergé dans un bain chaud d'aluminium (environs 50 ° C) avec un agent de gravure comme de l'acide phosphorique ($H_3PO_4$) pendant un temps déterminé. Ce temps déterminé peut être de l'ordre de 2 à 3 minutes.

L'échantillon est alors rincé sous l'eau distillée et séché sous flux gazeux de $N_2$.

Dans le mode de réalisation plus particulièrement décrit ici, les contacts métalliques comprennent, une première électrode en ligne 20, une seconde électrode en ligne 20' parallèle à la première et un premier 21 et deuxième 22 plots de contact.

Le premier plot de contact 21 est sensiblement parallélépipédique et orthogonal aux électrodes en étant relié à la première électrode 20 et s'étend dans l'espace entre la paire 20, 20' d'électrodes.

Au niveau de la portion d'extrémité du premier plot 21 se trouve le deuxième plot 22 de forme carrée.

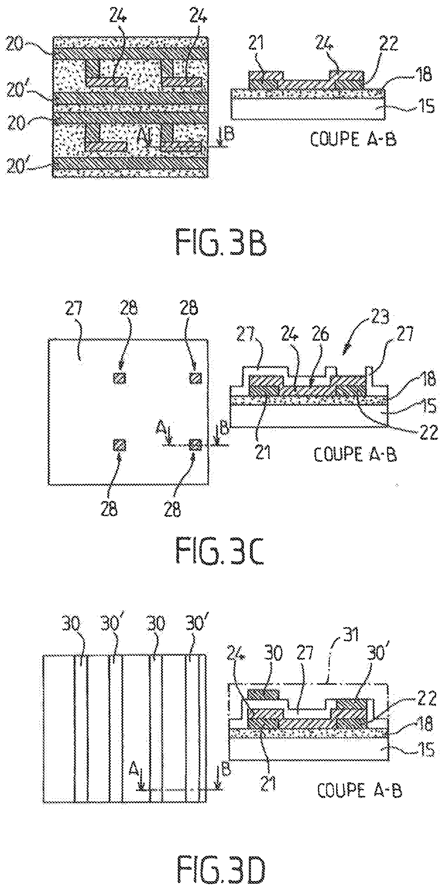

La couche intermédiaire 23 est formée dans une quatrième étape (figure 3B et 3C).

Le procédé de fabrication consiste en une sous-étape de dépôt de la couche piézoélectrique 24 de semi-conducteurs.

La couche piézoélectrique 24 recouvre entièrement les plots 21, 22 des électrodes de ligne et comble l'espace entre les deux plots 21 et 22 d'électrode d'une même paire.

Le dépôt s'effectue par PECVD, par exemple en déposant une épaisseur d'environs 130 nm de Nitrure de silicium microcristallins dopé en Arsenic ($AsH_4$).

Le procédé est à nouveau suivi d'une photo-lithographie. La gravure est faite par un procédé connu de l'homme du métier sous la dénomination de gravure ionique réactive (RIE) en utilisant l'hexafluorure de soufre plasma ($SF_6$).

La couche intermédiaire est ainsi formée par dépôt plasma du silicium dopé sous une couche isolante.

La seconde sous-étape de la formation de cette couche consiste quant à elle à déposer la couche de matériau électriquement isolant. Cette couche est d'une épaisseur maximale de 300 nm.

Cette couche va comporter des trous 28 traversant au droit des seconds plots 22 de la première couche de réseau d'électrodes de ligne.

Le matériau isolant est par exemple de l'oxyde de silicium ($SiO_2$). Il est déposé par exemple par pulvérisation et est suivi d'une photolithographie. La gravure est faite par gravure ionique réactive RIE en utilisant du $SF_6$.

Dans une cinquième étape (figure 3D) on procède au dépôt de la couche, dite troisième couche, d'électrodes de colonne 30, 30' par exemple de 500 nm d'épaisseur, en aluminium par évaporation par effet Joule, suivie d'une photo-lithographie pour créer les seconds contacts 22 métalliques de colonnes, en réseau orthogonal au réseau de lignes.

Le réseau est agencé de manière à ce que les lignes d'une paire d'électrodes de colonne 30 passent au droit du premier 21 et second 22 plots de contact.

L'une des électrodes de colonne 30 de la paire surplombe dans l'ordre une couche isolante 27, une couche piézoélectrique 24 et le premier plot de contact 21.

L'autre est au droit directement d'une couche piézoélectrique 24 et du second plot de contact 22.

Ici encore une technique de gravure par voie humide est par exemple utilisée comme précédemment.

Dans un mode de réalisation de l'invention l'ensemble précédemment obtenu subit un recuit thermique à faible température (par exemple inférieur à 200°C par exemple 180 ° C) pendant un temps déterminé, par exemple de 2 heures dans un four. Ceci améliore l'interface silicium microcristallin / aluminium, et augmente la conductivité d'un facteur supérieur à 1.5 voire 2.

La figure 4 montre en perspective l'organe capteur 6 de la figure 1. Celui-ci comporte une pièce support S en forme d'arceau filiforme A, rigide, de soutien externe de la plaque 14 sur laquelle il est fixé par exemple de façon amovible par des points autocollant P répartis sur la face externe de la feuille support 15 en matière plastique souple, de la plaque 14.

Plus précisément la pièce support S comprend d'un côté une partie en forme de U propre à être placée du côté des dents et est fermée de l'autre côté par une barre B de rigidification des branches du U qui va venir au-dessus du palais du patient. La forme d'arceau rigide, légèrement conformée en cuillère par exemple, de la pièce support est agencée pour s'insérer facilement dans la bouche du patient de sorte que la plaque 14 puisse être en contact, en sandwich entre les dents du dessus et du dessous, en libérant justement cette surface de contact.

En d'autres termes, l'arceau comporte une portion qui est sensiblement en forme de fer à cheval ou de « U » en vue de dessus et comprend une barre centrale entre les branches du « U » qui forme une portion bombée, qui peut par exemple venir en butée contre la voûte palatine du patient, pour assurer la bonne tenue de l'ensemble.

Soutenu par l'arceau A se trouve la plaque 14 et ses capteurs.

Celle-ci comprend une extrémité dite de mesure proprement dite, munie d'une partie centrale C dénuée de capteur et de deux parties périphériques H, symétriques par rapport à l'axe transversal XX' de l'organe capteur 6, à l'intérieur de l'arceau et en vis-à-vis des dents, munis desdits capteurs 17.

La plaque comprend également des broches 33 de connexion, à l'extérieur de l'arceau support du côté opposé à la partie centrale C et vers le manche de préhension par le dentiste.

Ces broches 33 de connexion électrique viennent en contact avec des picots (non représentés) solidaires d'une plaque de support R (en trait mixte) qui permettent de récupérer les mesures de la plaque et de les transmettre aux moyens de calcul via la carte d'acquisition 9.

Dans un mode de réalisation de l'invention, la plaque 14 de capteurs est réutilisable un nombre déterminé de fois ou jetable.

On a également représenté sur la figure 4 un agrandissement de la partie capteur proprement dite qui va maintenant être décrite plus avant.

Dans le mode de réalisation plus particulièrement décrit ici chaque électrode de ligne 20 est dédoublée par une électrode parallèle 20' déportée permettant une flexibilité de géométrie dans la formation de l'organe détecteur en particulier cela autorise la formation en « U » de la plaque.

Les deux électrodes 20, 20'forment ainsi une paire d'électrodes.

Chaque électrode de ligne (une par paire) et de colonne est connectée à une broche de connexion 33 connue en elle-même et montée sur la pièce support et formant un élément de connexion.

Pour une ligne ou une colonne donnée, il existe une unique broche 33 de connexion électrique.

Le principe électrique de la mesure va maintenant être décrit.

Une tension électrique est par exemple appliquée entre une broche de ligne 20 et une broche de colonne 30.

L'intensité du courant est mesurée à l'une des broches et est suivant la loi d'ohm fonction de la résistance électrique sur le parcours des électrons.

Lorsqu'une pression est exercée sur un capteur de pression, la géométrie de la couche piézoélectrique est modifiée et donc ses propriétés électriques dont sa résistivité.

La mesure électrique peut être reliée à une donnée géométrique car le contact électrique ne peut se faire entre ligne et colonne qu'au travers de la couche piézoélectrique et par les trous traversant de la couche isolante.

La valeur de résistance électrique d'un tel matériau est modifiée lors d'une déformation physique en suivant l'équation :

$$\varepsilon \ * \ FG \ = \ \Delta R/ \ R0$$

Où $\Delta R$ est la variation de résistance électrique entre la résistance initiale et la résistance finale, R0 la résistance électrique initiale, FG le facteur de jauge (constante caractéristique du matériau piézoélectrique) et $\varepsilon$ (epsilon) la déformation du matériau, qui permet de faire le lien avec une pression extérieure.

Plus précisément, considérant les caractères prépondérants des modules de young du PEN et du nitrure de silicium (respectivement 270 GPa et 6,45 GPa) par rapport aux autres couches, le modèle précédemment décrit peut se rapporter à une couche de PEN en sandwich entre deux couches de nitrure de silicium. Les couches ayant par exemple et respectivement 125μm, 550nm et 250nm d'épaisseur.

Ainsi on obtient un modèle reliant la déformation et la résistance mesurée suivant:

$$\varepsilon = \left(\frac{1}{R} \pm \frac{1}{R_0}\right) \frac{d_s + d_{f1} + d_{f2}}{2} \frac{\chi(\eta_1^2 + \eta_2^2) + 2(\chi\eta_1 + \chi\eta_1\eta_2 + \eta_2) + 1}{\chi(\eta_1 + \eta_2)^2 + (\eta_1 + \eta_2)(1+\chi) + 1}$$

Avec ε : déformation du matériau

$d_s$ ; $d_{f1}$ et $d_{f2}$ : épaisseurs respectives du PEN et des couches de nitrure de Silicium

$$\chi = \frac{Y_f}{Y_S} \quad ; \quad \eta_1 = \frac{d_{f1}}{d_S} \quad ; \quad \eta_2 = \frac{d_{f2}}{d_S}$$

Où $Y_s$ et $Y_f$ sont les modules d'Young du Substrat ($Y_s$) i.e. 2,5GPa, et des couches de nitrure de Silicium ($Y_f$) i.e. 270 GPa.

En choisissant cette limitation, les calculs d'association d'une pression à une différence de résistance mesurée sont simplifiés comme le montre le caractère linéaire du relevé expérimental de la variation de courant en fonction de la déformation présentant toujours la même pente (figure 4A).

En abscisse figure la contrainte epsilon en % et en ordonnée la variation relative du courant. Les quatre valeurs obtenues sont données en faisant varier la largeur (W) pour la même longueur (L) ou l'inverse. Cette limitation permet d'obtenir une précision de mesure de l'ordre micrométrique.

Dans le mode de réalisation plus particulièrement décrit ici, le dispositif comprend des moyens 5 d'acquisition (figure 5). Ces moyens d'acquisition comportent une carte 34 d'acquisition sur laquelle sont montés un module 35 de multiplexage/démultiplexage des informations issues des lignes 36 et des colonnes 37.

La carte comprend également des moyens 38 adaptateurs du signal électrique pour qu'il soit fournis à un convertisseur 39/40 analogique/numérique pour permettre le traitement par les moyens 10 de calcul, et un module 41 de communication de la carte avec l'ordinateur 12.

Chaque mesure de pression comporte deux mesures de résistivité, la première dite initiale sans pression appliquée à mesurer et la seconde avec la pression à mesurer appliquée sur l'objet.

A titre d'exemple la mesure de chaque capteur 17 peut s'effectuer selon le schéma suivant:

- Par interrogation (sollicitation par application d'une tension aux broches correspondantes) aléatoire de n'importe quel capteur présent et ainsi de suite jusqu'à ce que tous aient été interrogés.
- par interrogation de tous les capteurs pour une colonne ou ligne fixée, jusqu'à ce que toutes les colonnes ou lignes aient été interrogées.
- Par interrogation d'une zone d'intérêt particulière.

Un procédé selon un mode de réalisation de l'invention va maintenant être décrit en référence aux figures 1, 6 et 7.

Le dentiste (main 7) enclenche via l'ordinateur 12, le début de la mesure.

Dans une première étape (42), une première passe des mesures de l'ensemble des capteurs est réalisée et le résultat est introduit dans une mémoire de l'ordinateur sous la forme par exemple de « Ligne 5 - colonne 27 - Initial - 28 *(MΩ)* Mégohms ».

Dans une deuxième étape (43), la pièce support munie de la plaque 14 est introduite dans la bouche du patient 5 qui referme sa mâchoire 4.

La plaque 14 est donc prise en sandwich entre les dents supérieures et inférieures.

La mâchoire exerce alors et maintient une pression sensiblement constante, dont on peut déterminer la pression moyenne facilement par la mesure moyennée et le calcul.

Les moyens 10 de calcul commandent alors (tape 44) une deuxième mesure de l'ensemble ou de certains capteurs de pression.

Les résultats des mesures sont également introduits dans la mémoire de l'ordinateur sous forme par exemple « Ligne 5 - colonne 27 - mesure 1 - 245 *Ω* ohms. »

Les moyens 10 de calcul disposant des caractéristiques internes de l'organe détecteur (notamment les épaisseurs et les modules de Young des matériaux) préalablement introduites dans l'ordinateur et disposant des différences de résistance entre les positions initiales et sous pression pour une paire de coordonnée (ligne/colonne) données, ils en déterminent la pression appliquée à la plaque pour chaque couple de coordonnées (étape 45) .

Pour chaque coordonnée de l'espace dans le plan, les moyens de calcul associent alors (étape 46) une valeur de différence de résistance donc de pression et établissent le champ d'intensités de pression, réalisant ainsi la cartographie (étape 47) des forces d'occlusion du patient.

Chaque intensité de pression correspond à une intensité de déformation et pénétration d'une dent dans l'épaisseur de la plaque de détection.

Les mesures permettent ainsi de déterminer la surface (coordonnées) et les forces (intensité de la pression) occlusales.

Dans un mode de réalisation, la deuxième mesure de la pression peut être réitérée (test 53), par exemple avec un taux de rafraichissement supérieur à 100 hz de manière a avoir une détermination dynamique.

Egalement dans un mode de réalisation, les moyens de calcul comprennent des moyens d'horodatage et enregistrent pour chaque mesure le temps passé par rapport à un évènement de référence (par exemple l'enclenchement de la mesure).

Ainsi, la mesure dynamique de l'occlusion est réalisée.

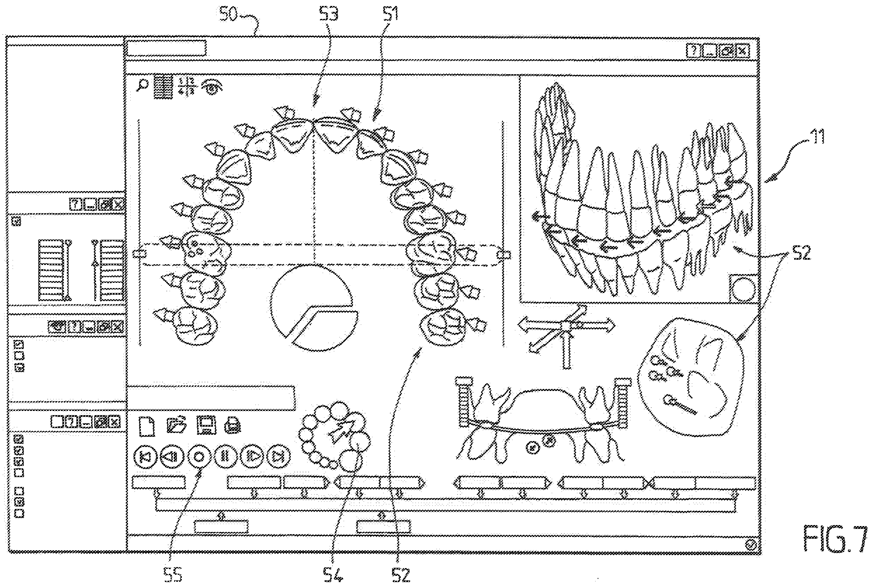

En référence à la figure 7, les moyens 10 de calcul comprennent de plus des moyens agencés pour afficher dynamiquement sur un écran d'ordinateur 50 la cartographie 11 des forces occlusales ainsi qu'éventuellement la forme 51 de la dentition du patient en intégrant des données complémentaires 52 (données sur la mâchoire propre à un patient déterminé, historique, dates, etc).

Ces données sont acquises par des moyens connus en eux même, d'imagerie, par exemple, optiques et/ou radiographique (non représentés).

Les données sont alors fusionnées aux données déterminées de la surface occlusale pour former une cartographie complète 52 de la dentition 53 du patient et des forces occlusales 54 qu'il subit en mangeant.

Ceci va permettre au dentiste en temps réel de modifier les dents et/ou prothèses du patient de façon parfaitement contrôlée et traçable en vue de minimiser et/ou éliminer les contraintes et le déséquilibre de la mâchoire.

Un menu classique 55, de type windows (marque enregistrée) permet par exemple de se déplacer dans les différents fichiers sans difficulté par simple clic, des représentations synthétiques par exemple sous forme de camembert 56 pouvant être affichées.

Les données acquises sont par ailleurs rafraichies dynamiquement.

**Revendications**

1. Système de détermination de la surface de contact et de la répartition des forces exercées entre les dents supérieures (2) et les dents inférieures (3) d'une mâchoire (4) de patient (5), comprenant un organe détecteur (6) de contacts entre les dents agencé pour être inséré entre les dents (2, 3) du patient (5), des éléments (8) de connexion de l'organe détecteur (6) avec des moyens (10) de calcul de la répartition des forces occlusales pour en réaliser la cartographie (11) et lesdits moyens (10) de calcul,
**caractérisé en ce que** ledit organe détecteur (6) comprend une pièce de support (13) d'une plaque (14) souple amovible, ladite plaque (14) souple étant formée d'une feuille (15) en matière plastique souple rendue solidaire d'une grille (16) de capteurs de pression (17) comprenant une première couche (19) comportant un premier réseau d'électrodes (20, 20') dites électrodes de ligne, généralement parallèles, d'une deuxième couche intermédiaire (23) de résistivité variable en fonction de la pression qui lui est appliquée, et d'une troisième couche (29) comprenant un second réseau d'électrodes (30,30'), dites électrode de colonne, généralement parallèles, définissant des zones dites d'intersection avec les électrodes (20, 20') de ligne, **en ce que** la grille (16) de capteurs comprend au moins 5000 zones d'intersections adjacentes les unes des autres, de section carrée inférieure ou égale à 600 micro mètres, et **en ce que** la couche intermédiaire (23) comprend une couche ou tranche (24) semi-conductrice de matériau piézoélectrique.

2. Système selon la revendication 1, **caractérisé en ce que** la tranche semi-conductrice (24) est en silicium microcristallin semi-conducteur d'épaisseur inférieure ou égale à 50 nano mètres

3. Système selon la revendication 2, **caractérisé en ce que** la couche intermédiaire (23) est formée par dépôt plasma du silicium dopé sur une couche isolante.

4. Système selon l'une quelconque des revendications précédentes, **caractérisé en ce que** le métal est de l'aluminium.

5. Système selon l'une quelconque des revendications précédentes, **caractérisé en ce que** la première couche (19) comprend plus de cent électrodes (20, 20') de ligne et la troisième couche (29) plus de cinquante électrodes (30, 30') de colonne.

**6.** Système selon l'une quelconque des revendications précédentes, **caractérisé en ce que** la première couche (19) est d'épaisseur comprise entre 200 nm et 400 nm, la couche intermédiaire (23) est d'épaisseur comprise entre 100 nm et 200 nm, l'épaisseur de la tranche (24) étant inférieure à 30 nm, et **en ce que** la troisième couche (29) est d'épaisseur comprise entre 400 nm et 600 nm.

**7.** Système selon l'une quelconque des revendications précédentes, **caractérisé en ce que** les éléments (8) de connexion comprennent une carte (9) d'acquisition et une broche de connexion (33) avec la pièce support (13).

**8.** Système selon l'une quelconque des revendications précédentes, **caractérisé en ce que** les moyens (10) de calcul comprennent des moyens agencés pour afficher dynamiquement sur un écran d'ordinateur (12, 50) la cartographie (11) des forces occlusales en intégrant des données de la mâchoire (4) propres à un patient (5) déterminé.

**9.** Procédé de détermination de la surface de contact et de la répartition des forces occlusales exercées entre les dents supérieures (2) et les dents inférieures (3) d'une mâchoire (4) de patient (5), adapté pour une prise d'empreinte dentaire, dans lequel on détecte les contacts entre les dents par insertion d'un organe (6) entre les dents (2,3) du patient (5), on mesure les pressions par le biais dudit organe (6) munie d'une feuille (15) en matière plastique souple collée à une grille (16) de capteurs de pression (17) comprenant au moins 5000 capteurs adjacents les uns des autres, de section carrée inférieure ou égale à 600 micro mètres, ladite grille (16) comprenant une couche intermédiaire (23) de résistivité variable en fonction de la pression, ladite couche intermédiaire (23) comprenant une tranche (24) en matériau semi-conducteur piézoélectrique et on calcule la cartographie (11) des forces occlusales à partir de la répartition des pressions mesurées.

**10.** Procédé selon la revendication 9, **caractérisé en ce que** le matériau semi-conducteur piézoélectrique est du silicium microcristallin d'épaisseur inférieure ou égale à 50 nano mètres.

**11.** Procédé selon l'une des revendications 9 et 10, **caractérisé en ce qu'**on affiche dynamiquement sur un écran d'ordinateur (12, 50) la cartographie (11) en intégrant des données complémentaires.


**Patentansprüche**

**1.** System zur Bestimmung der Kontaktfläche und der Verteilung der zwischen den oberen Zähnen (2) und den unteren Zähnen (3) eines Kiefers (4) eines Patienten (5) ausgeübten Kräfte, umfassend ein Organ (6) für die Erfassung von Kontakten zwischen den Zähnen, welches angeordnet ist, um zwischen die Zähne (2, 3) des Patienten (5) eingefügt zu werden, Elemente (8), um das Erfassungsorgan (6) mit Mitteln (10) für die Berechnung der Verteilung der Okklusionskräfte zu verbinden, um deren Kartographie (11) zu erstellen, und die Rechenmittel (10),
**dadurch gekennzeichnet, dass**

- das Erfassungsorgan (6) ein Trägerteil (13) für eine flexible abnehmbare Platte (14) aufweist, wobei die flexible Platte (14) durch ein Blatt (15) aus flexiblem Kunststoff gebildet ist, das mit einem Gitter (16) aus Drucksensoren (17) fest verbunden ist, das eine erste Schicht (19) mit einem ersten Gitter aus Elektroden (20, 20'), sogenannte Zeilenelektroden, die im Allgemeinen parallel verlaufen, eine zweite Zwischenschicht (23) mit einem Wiederstand, der in Abhängigkeit von dem Druck variiert, mit dem er beaufschlagt wird, und eine dritte Schicht (29) mit einem zweiten Gitter aus Elektroden (30, 30'), sogenannte Spaltenelektroden, die im Allgemeinen parallel verlaufen und mit den Zeilenelektroden (20, 20') sogenannte Kreuzungsbereiche definiert, aufweist,
- das Sensorengitter (16) mindestens 5.000 aneinander angrenzende Kreuzungsbereiche mit einem quadratischen Querschnitt kleiner oder gleich 600 Mikrometer umfasst und
- die Zwischenschicht (23) eine(n) halbleitende(n) Schicht bzw. Wafer (24) aus einem piezoelektrischen Material umfasst.

**2.** System nach Anspruch 1,
**dadurch gekennzeichnet,**
**dass** der halbleitende Wafer (24) aus halbleitendem mikrokristallinem Silizium mit einer Dicke kleiner oder gleich 50 Nanometer besteht.

**3.** System nach Anspruch 2,

**dadurch gekennzeichnet,**
**dass** die Zwischenschicht (23) durch Plasmaabscheidung des dotierten Siliziums auf einer Isolierschicht gebildet ist.

4. System nach einem beliebigen der vorhergehenden Ansprüche,
**dadurch gekennzeichnet,**
**dass** das Metall Aluminium ist.

5. System nach einem beliebigen der vorhergehenden Ansprüche,
**dadurch gekennzeichnet,**
**dass** die erste Schicht (19) mehr als hundert Zeilenelektroden (20, 20') und die dritte Schicht (29) mehr als fünfzig Spaltenelektroden (30, 30') umfasst.

6. System nach einem beliebigen der vorhergehenden Ansprüche,
**dadurch gekennzeichnet,**
**dass** die erste Schicht (19) eine Dicke zwischen 200 nm und 400 nm aufweist, die Zwischenschicht (23) eine Dicke zwischen 100 nm und 200 nm aufweist, wobei die Dicke des Wafers (24) kleiner als 30 nm ist, und die dritte Schicht (29) eine Dicke zwischen 400 nm und 600 nm aufweist.

7. System nach einem beliebigen der vorhergehenden Ansprüche,
**dadurch gekennzeichnet,**
**dass** die Verbindungselemente (8) eine Erfassungskarte (9) und einen Stecker (33) zur Verbindung mit dem Trägerteil (13) umfassen.

8. System nach einem beliebigen der vorhergehenden Ansprüche,
**dadurch gekennzeichnet,**
**dass** die Rechenmittel (10) Mittel umfassen, die angeordnet sind, um die Kartographie (11) der Okklusionskräfte dynamisch an einem Rechnerbildschirm (12, 50) unter Einbeziehung der einem bestimmten Patienten (5) eigenen Daten des Kiefers (4) anzuzeigen.

9. Verfahren zur Bestimmung der Kontaktfläche und der Verteilung der zwischen den oberen Zähnen (2) und den unteren Zähnen (3) eines Kiefers (4) eines Patienten (5) ausgeübten Okklusionskräfte, welches für eine Zahnabdrucknahme geeignet ist, bei dem die Kontakte zwischen den Zähnen durch Einlegen eines Organs (6) zwischen die Zähne (2, 3) des Patienten (5) erfasst werden, die Drücke mittels des Organs (6) gemessen werden, welches mit einem Blatt (15) aus flexiblen Kunststoff versehen ist, das auf einem Gitter (16) aus Drucksensoren (17) geklebt ist, welches mindestens 5.000 aneinander angrenzende Sensoren mit einem quadratischen Querschnitt kleiner oder gleich 600 Mikrometer umfasst, wobei das Gitter (16) eine Zwischenschicht (23) mit einem Wiederstand aufweist, der in Abhängigkeit von dem Druck variiert, wobei die Zwischenschicht (23) einen Wafer (24) aus einem halbleitenden piezoelektrischen Material aufweist und wobei die Kartographie (11) der Okklusionskräfte anhand der Verteilung der gemessenen Drücken berechnet wird.

10. Verfahren nach Anspruch 9,
**dadurch gekennzeichnet,**
**dass** das halbleitende piezoelektrische Material mikrokristallines Silizium mit einer Dicke kleiner oder gleich 50 Nanometer.

11. Verfahren nach einem der Ansprüche 9 und 10,
**dadurch gekennzeichnet,**
**dass** die Kartographie (11) dynamisch an einem Rechnerbildschirm (12, 50) unter Einbeziehung ergänzender Daten angezeigt wird.

**Claims**

1. System for determining the contact surface and the distribution of the forces exerted between the upper teeth (2) and the lower teeth (3) of a jaw (4) of a patient (5), comprising a detecting member (6) for detecting contacts between the teeth arranged to be inserted between the teeth (2, 3) of the patient (5), elements (8) for connecting the detecting member (6) with means (10) for calculating the distribution of the occlusal forces in order to produce the mapping (11) thereof, and said calculating means (10),

**characterised in that** said detecting member (6) comprises a part (13) for supporting a detachable flexible plate (14), said flexible plate (14) being formed of a sheet (15) of flexible plastic material locked integrally with a grid (16) of pressure sensors (17) comprising a first layer (19) having a first array of electrodes (20, 20') referred to as line electrodes, which are generally parallel, of a second intermediate layer (23) of variable resistivity which varies as a function of the pressure which is applied to it, and of a third layer (29) comprising a second array of electrodes (30, 30'), referred to as column electrodes, which are generally parallel, defining so-called zones of intersection with the line electrodes (20, 20'),

**in that** the grid (16) of sensors comprises at least 5000 zones of intersection which are adjacent to one another, with a square section of less than or equal to 600 micrometres,

and **in that** the intermediate layer (23) comprises a semi-conducting layer or wafer (24) of piezoelectric material.

2. System according to claim 1, **characterised in that** the semi-conducting wafer (24) is made of a semi-conducting micro-crystalline silicon with a thickness of less than or equal to 50 nanometres.

3. System according to claim 2, **characterised in that** the intermediate layer (23) is formed by plasma deposition of doped silicon on an insulating layer.

4. System according to any one of the preceding claims, **characterised in that** the metal is aluminium.

5. System according to any one of the preceding claims, **characterised in that** the first layer (19) comprises more than a hundred line electrodes (20, 20') and the third layer (29) comprises more than fifty column electrodes (30, 30').

6. System according to any one of the preceding claims, **characterised in that** the first layer (19) has a thickness of between 200 nm and 400 nm, the intermediate layer (23) has a thickness of between 100 nm and 200 nm, the thickness of the wafer (24) being less than 30 nm, and **in that** the third layer (29) has a thickness of between 400 nm and 600 nm.

7. System according to any one of the preceding claims, **characterised in that** the connecting elements (8) comprise a card (9) for acquisition and a pin (33) for connecting with the supporting part (13).

8. System according to any one of the preceding claims, **characterised in that** the calculating means (10) comprise means arranged to display the mapping (11) of the occlusal forces dynamically on a computer screen (12, 50) incorporating data on the jaw (4) relating to a given patient (5).

9. Method for determining the contact surface and the distribution of the occlusal forces exerted between the upper teeth (2) and the lower teeth ((3) of a jaw (4) of a patient (5), adapted for taking a dental impression, in which the contacts between the teeth are detected by inserting a member (6) between the teeth (2, 3) of the patient (5), the pressures are measured by means of said member (6) provided with a sheet (15) of flexible plastic material glued to a grid (16) of pressure sensors (17) comprising at least 5000 sensors which are adjacent to one another, with a square section of less than or equal to 600 micrometres, said grid (16) comprising an intermediate layer (23) of variable resistivity which varies as a function of the pressure, said intermediate layer (23) comprising a wafer (24) of piezo-electric semi-conducting material, and the mapping (11) of the occlusal forces is calculated from the distribution of the measured pressures.

10. Method according to claim 9, **characterised in that** the piezo-electric semi-conducting material is micro-crystalline silicon with a thickness of less than or equal to 50 nanometres.

11. Method according to one of claims 9 and 10, **characterised in that** the mapping (11) is displayed dynamically on a computer screen (12, 50) incorporating additional data.

FIG.1

FIG.4

FIG.2

COUPE A-B

FIG.3A

FIG.3B

FIG.3C

FIG.3D

FIG.4A

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0216899 A
- WO 8902727 A